# EUROPÄISCHE PATENTSCHRIFT

(11) **EP 0 385 143 B1**
(45) Veröffentlichungstag und Bekanntmachung des Hinweises auf die Patenterteilung: **19.01.1994**
(21) Anmeldenummer: 90102353.1
(22) Anmeldetag: 07.02.1990
(51) Int. Cl.: A01F 12/44

(54) **Anordnung zweier Leitbleche**
Arrangement of two guide plates
Arrangement de deux tôle-guides

(30) Priorität: 25.02.1989 DE 3905970
(43) Veröffentlichungstag der Anmeldung: 05.09.1990
(73) Patentinhaber: DEERE & COMPANY, Moline, Illinois 61265 (US)
(72) Erfinder: Hirsch, Walter, D-6654 Kirkel/Limbach (DE); Velten, Werner, D-6662 Contwig (DE)
(74) Vertreter: Feldmann, Bernhard

(56) Entgegenhaltungen:
- US-A- 3 800 803
- US-A- 4 751 932
- ATL, Agrartechnische Lehrbriefe, 263-5, Seite 12, Vogel Verlag, 8700 Würzburg, Max Planck-Strasse 7-9 und Prospekt Claas Dominator 68, Seite 10

## Beschreibung

Die Erfindung betrifft eine Vorrichtung mit zwei gegensinnig oszillierenden Förderböden, an denen in ihrem Übergangsbereich jeweils ein Leitblech angebracht ist.

Es ist insbesondere bei Mähdreschern bekannt (ATL, Agrartechnische Lehrbriefe, 263-5, Seite 12, Vogel-Verlag, 8700 Würzburg, Max-Planck-Straße 7 - 9), einen stromaufwärts gelegenen, als Stufenboden ausgebildeten Förderboden gegensinnig zu einem stromabwärts gelegenen und als Sieb ausgebildeten Förderboden oszillieren zu lassen. Beide Förderböden sind mit mehreren sich über die gesamte Länge erstreckenden Leitblechen versehen, um zu vermeiden, daß bei Hangarbeiten das gesamte Fördergut auf nur eine Seite der Förderböden rutscht und dort nicht mehr zufriedenstellend bearbeitet werden kann.

Ein bei derartig angeordneten Förderböden erkanntes Problem besteht darin, daß das Fördergut während einer Schräglage der Förderböden dazu tendiert, aus einem von zwei Leitblechen gebildeten Schacht in einen benachbarten Schacht zu wechseln, so daß der hangobere Schacht auf dem stromabwärts gelegenen Förderboden leer, die hangabwärts gelegenen Schächte aber überfüllt sind.

Es ist zwar bekannt (Prospekt: CLAAS Dominator 68, Seite 10 und DE-OS-2 405 207), die stromaufwärts gelegenen Leitbleche seitlich an den stromabwärts gelegenen Leitblechen überlappend vorbeizuführen; bei diesen Anordnungen handelt es sich jedoch um gleichsinnig oszillierende und miteinander schwingende Förderböden, so daß im Bereich der Überlappung zwischen den jeweiligen Leitblechen keine Relativbewegung stattfindet. Bei gegensinnig oszillierenden Leitblechen würde diese bekannte Maßnahme dazu führen, daß sich Kurzstroh und sonstige grobe Bestandteile in dem Fördergut in den Spalt zwischen den Leitblechen drängen, die Leitbleche auseinanderdrücken und schließlich verbiegen.

Die der Erfindung Zugrunde liegende Aufgabe wird darin gesehen, eine Anordnung zweier Leitbleche im Übergangsbereich zwischen zwei gegensinnig oszillierenden Förderböden vorzuschlagen, die gewährleistet, daß das Fördergut einwandfrei überführt wird und keinen Stau zwischen zwei Leitblechen erzeugt.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist der zwischen zwei Leitblechen bestehende Spalt von oben herab abgedeckt, und das Fördergut wird von dem als Dach ausgebildeten stromaufwärts gelegenen Leitblech von ihm weggeleitet. Je nachdem wie weit der hangaufwärts gelegene Flügel des Daches in den hangaufwärts gelegenen Schacht hineinreicht, findet auch eine mehr oder weniger große Hangaufwärtsbewegung des Förderguts beim Übergang auf den stromabwärts gelegenen Förderboden statt.

In einfacher Weise wird eine Überlappung dadurch erzielt, daß das stromaufwärts gelegene Leitblech im Querschnitt die Form eines auf den Kopf gestellten -Y- oder -V- darstellt und so das stromabwärts gelegene Leitblech in seinem Zwischenraum aufnehmen kann. Die Y- und die V-Form ergeben zudem zwei abwärts geneigt verlaufende Flügel, auf denen das Fördergut problemlos nach unten gleiten kann. Die stromaufwärts gelegenen Leitbleche mögen schließlich auf ihrer gesamten Länge diese Y- oder V-Form aufweisen und im Bereich des stromaufwärts gelegenen Förderbodens auf diesen aufgeschweißt sein und ihm dadurch eine erhöhte Stabilität verleihen. Diese Form vermag sich auch dadurch zu ergeben, daß die Seitenwände zweier seitlich voneinander angeordneter Schächte entsprechend gekröpft und miteinander verbunden werden.

Ist das stromabwärts gelegene Leitblech in seinem Querschnitt schlank, z. B. als einfaches, flaches Blech mit rechteckigem Querschnitt ausgebildet, kann es frei in dem vorgenannten Zwischenraum oszillieren, und seitliche Relativbewegungen zwischen den Leitblechen beider Förderböden führen nicht zu deren Kollision.

In der Zeichnung ist ein nachfolgend näher beschriebenes Ausführungsbeispiel der Erfindung dargestellt. Es zeigt:
- Fig.: Abschnitte zweier Förderböden mit dazugehörigen Leitblechen in Seitenansicht und

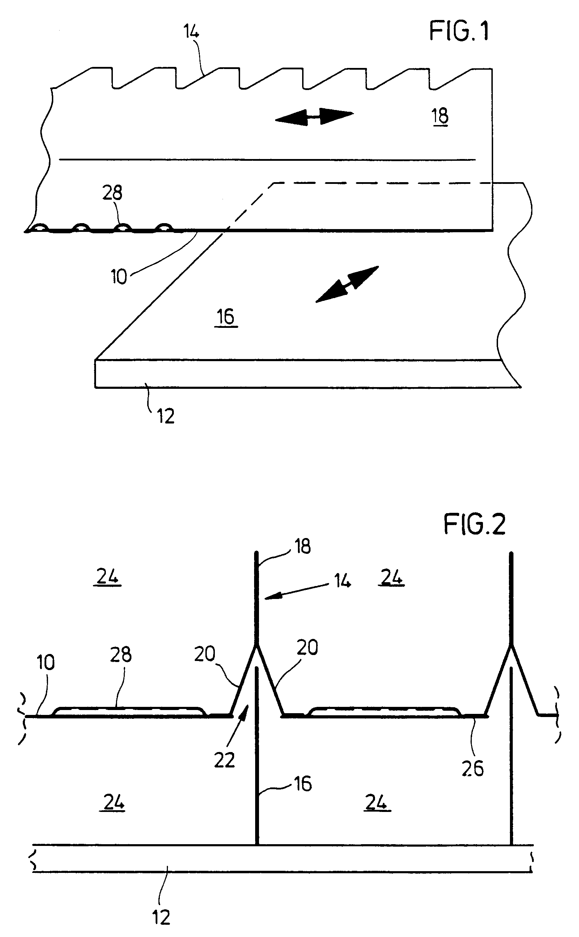

- Fig. 2: die Förderböden und die Leitbleche aus Figur 1 in Vorderansicht.

In Figur 1 ist ein stromaufwärts gelegener Förderboden 10 und ein stromabwärts gelegener Förderboden 12 vorgesehen, die jeweils mit Leitblechen 14 bzw. 16 bestückt sind, wobei es unter Umständen ausreichend sein kann, wenn jeder Förderboden 10, 12 jeweils mit nur einem einzigen Leitblech 14, 16 versehen ist.

Beide Förderböden 10, 12 werden gegensinnig oszillierend angetrieben, wie dies mit Pfeilen angedeutet ist, und stellen bei der Anwendung in einem nicht gezeigten Mähdrescher einen Stufenboden (10) und ein Obersieb (12) dar, auf denen Getreide, Spreu und Kurzstroh als Fördergut transportiert werden.

Der stromaufwärts gelegene Förderboden 10 befindet sich oberhalb des stromabwärts gelegenen Förderbodens 12 und überlappen diesen auf einem kurzen Bereich seiner Länge.

Die Leitbleche 14 auf dem stromaufwärts gelegenen Förderboden 10 weisen im Querschnitt die Form eines auf den Kopf gestellten -Y- auf, das einen Steg 18 und zwei Schenkel 20 aufweist. Zwischen beiden Schenkeln 20 ergibt sich ein gleichschenkliger, im Querschnitt dreieckiger, zylindrischer und nach unten offener Zwischenraum 22. Diese spezielle und sehr vorteilhafte Form ergibt sich bei dem Ausführungsbeispiel daraus, daß die Seitenwände benachbarter Schächte 24 zweifach gleichsinnig nach oben gekröpft und in ihrem oberen Bereich miteinander punktverschweißt werden. In dem oberen Bereich bildet sich somit der Steg 18, während in dem unteren Bereich die Schenkel 20 nur an einer Kante zusammenfallen und ansonsten zwischen sich den Zwischenraum 22 bilden. Der Boden 26 der Schächte 24 zwischen den Schenkeln 20 ist mit Erhebungen 28 versehen, die eine gute Förderung des Förderguts bewirken.

Die Leitbleche 16 des stromabwärts gelegenen Förderbodens 12 sind als glattes Blech mit rechteckigem Querschnitt ausgebildet, die senkrecht auf dem Förderboden 12 stehen.

Die Anordnung der Leitbleche 14, 16 der beiden Förderböden 10, 12 ist so getroffen, daß die Stege 18 der stromaufwärts gelegenen Leitbleche 14 in der Eben, liegen, in der sich auch die stromabwärts gelegenen Leitbleche 16 erstrecken. Die Höhe der stromabwärts gelegenen Leitbleche 16 ist größer als die vertikale lichte Weite zwischen den beiden Förderböden 10, 12. Diese Anordnung ermöglicht es schließlich, daß die stromabwärts gelegenen Leitbleche 16 mittig in den Zwischenraum 22 zwischen den beiden Schenkeln 20 ragen und dort mit ausreichend seitlichem Spiel oszillieren können.

Die erfindungsgemäße Anordnung ist nicht auf die Anwendung bei einem Mähdrescher beschränkt. Vielmehr kann sie bei jeder aus mehreren hintereinander geschalteten Förderböden bestehenden Förder- oder Sortieranlage für loses Gut verwendet werden. In Frage kommen insbesondere Kartoffel- und Karottenvollernter, Getreide-, Kohle- oder Kiesförderer oder dergleichen. Insbesondere bei einem Mähdrescher können auch die Leitbleche aufeinander folgender Siebe oder mehrerer Stufen- oder Staffelböden erfindungsgemäß angeordnet und ausgebildet werden.

## Patentansprüche

1. Vorrichtung mit zwei gegensinnig oszillierenden Förderböden (10, 12), an denen in ihrem Übergangsbereich jeweils ein Leitblech (14, 16) angebracht ist, dadurch gekennzeichnet, daß das stromaufwärts gelegene Leitblech (14) des stromaufwärts gelegenen Förderbodens das stromabwärts gelegene Leitblech (16) des stromabwärts gelegenen Förderbodens mindestens auf einem Teilbereich seiner Länge oben und seitlich dachförmig übergreift.

2. Vorrichtung nach Anspruch 1, dadurch gekennzeichnet, daß das stromaufwärts gelegene Leitblech (14) zumindest in seinem Übergangsbereich im Querschnitt V- oder Y-förmig ausgebildet ist.

3. Vorrichtung nach Anspruch 1 oder 2, dadurch gekennzeichnet, daß das stromabwärts gelegene Leitblech (16) schlank ausgebildet ist und mit ausreichend Spiel im Zwischenraum (22) zwischen zwei Schenkeln (20) des stromaufwärts gelegenen Leitbleches (14) bewegbar ist.

## Claims

1. Apparatus with two counter-oscillating conveyor floors (10, 12), to which are fitted respective guide plates (14, 16) in their transfer region, characterized in that the upstream guide plate (14) of the upstream conveyor floor overlaps at least over a partial region in a roof shape over and to the sides the downstream guide plate (16) of the downstream conveyor floor.

2. Apparatus according to claim 1, characterized in that the upstream guide plate (14) has a V or Y shape in cross-section at least in its transfer region.

3. Apparatus according to claim 1 or 2, characterized in that the downstream guide plate (16) is of narrow shape and is movable with adequate play in the space (22) between the webs (20) of the upstream guide plate (14).

## Revendications

1. Dispositif avec deux fonds transporteurs (10, 12) oscillant en sens contraires et pourvus d'une tôle de guidage respective (14, 16) dans leur région de transition, **caractérisé** en ce que la tôle de guidage amont (14) du fond transporteur situé en amont recouvre en forme de toit, sur le dessus et sur les côtés, la tôle de guidage aval (16) du fond transporteur situé en aval sur au moins une partie de sa longueur.

2. Dispositif selon la revendication 1, **caractérisé** en ce que la tôle de guidage amont (14) est réalisée à section en V ou en Y au moins dans sa région de transition.

3. Dispositif selon la revendication 1 ou 2, **caractérisé** en ce que la tôle de guidage aval (16) est réalisée effilée et est mobile avec suffisamment de jeu dans l'espace intermédiaire (22) entre deux branches (20) de la tôle de guidage amont (14).
